Europäisches Patentamt

European Patent Office

Office européen des brevets

(19)

(11) Numéro de publication: **0 126 676**
**B1**

(12) # FASCICULE DE BREVET EUROPEEN

(45) Date de publication du fascicule du brevet:
**17.09.86**

(51) Int. Cl.⁴: **B 01 J 37/16**, B 01 J 23/56

(21) Numéro de dépôt: **84400921.7**

(22) Date de dépôt: **04.05.84**

(54) **Procédé de fabrication de catalyseurs pour le traitement des gaz d'échappement des moteurs à combustion interne.**

(30) Priorité: **19.05.83 FR 8308284**

(43) Date de publication de la demande:
**28.11.84 Bulletin 84/48**

(45) Mention de la délivrance du brevet:
**17.09.86 Bulletin 86/38**

(84) Etats contractants désignés:
**AT BE CH DE FR GB IT LI NL**

(56) Documents cités:
**DE - A - 2 341 732**
**FR - A - 822 519**
**FR - A - 2 171 253**
**FR - A - 2 209 603**
**FR - A - 2 317 963**
**FR - A - 2 413 935**

(73) Titulaire: **Société Française des Produits pour Catalyse "PRO-CATALYSE", 1-4, avenue de Bois Préau, F-92500 Rueil-Malmaison (FR)**

(72) Inventeur: **Blanchard, Gilbert, 5 Allée des Acacias Lagny-le-Sec, F-60330 Le Plessis Belleville (FR)**
Inventeur: **Brunelle, Jean-Pierre, Résidence Fontaine St Martin Rue de la Planchette, F-95350 Saint-Brice-sous-Forêt (FR)**
Inventeur: **Dozieres, Richard, Val des 4 Pignons 4, avenue de Beynes, F-78650 Beynes (FR)**
Inventeur: **Goldenberg, Emmanuel, 33, avenue Maréchal Foch, F-78300 Poissy (FR)**
Inventeur: **Prigent, Michel, 11, rue des Marronniers, F-92500 Rueil-Malmaison (FR)**

(74) Mandataire: **Savina, Jacques et al, RHONE-POULENC INTERSERVICES Service Brevets Chimie 25, quai Paul Doumer, F-92408 Courbevoie Cédex (FR)**

ACTORUM AG

## Description

La présente invention a pour objet un procédé de fabrication de 5 catalyseurs pour le traitement des gaz d'échappement des moteurs à combustion interne à allumage commandé.

La présente invention a plus particulièrement trait à un procédé de fabrication de catalyseurs pour le traitement desdits gaz d'échappement en vue de l'oxydation du monoxyde de carbone et des hydrocarbures qui y sont présents avec la réduction des oxydes d'azote également présents dans ces gaz.

Généralement, les catalyseurs convenant à l'oxydation et à la réduction catalytique des constituants contenus dans les gaz d'échappement des moteurs à combustion interne à allumage commandé comportent un support revêtu et/ou imprégné d'au moins un métal précieux du groupe du platine tels que le platine, le rhodium, le ruthénium, le palladium, l'iridium et un ou plusieurs métaux de base, ces métaux de base étant généralement choisis parmi: le cobalt, le zinc, le manganèse, le nickel, le tungstène, le cérium, le fer, le cuivre, le néodyme, le praséodyme, le rhénium, l'yttrium, le magnésium, le chrome, le zirconium, le molybdène, le lanthane, l'étain, le calcium, le strontium et le baryum.

Ces catalyseurs sont généralement préparés par les méthodes courantes, soit par imprégnation du support, soit par apport des métaux de la phase active lors de la fabrication du support. Généralement, on opère par imprégnation du support au moyen de solutions de composés minéraux ou organiques des métaux que l'on désire introduire.

Ainsi, selon les demandes de brevets européens EP-A 27 069, 54 472 et 60 740 au nom de la Société Française des Produits pour Catalyse: PRO-CATALYSE, il est connu de fabriquer des catalyseurs multifonctionnels pour le traitement des gaz d'échappement des moteurs à combustion interne, soit par imprégnations successives du support avec une solution contenant des composés du fer et du cérium, puis avec une solution contenant les composés des métaux précieux du groupe du platine que l'on désire introduire, soit par imprégnation du support avec des solutions contenant un mélange des sels des métaux de base et des métaux précieux. Afin d'obtenir une activité initiale élevée, il est généralement avantageux d'opérer une réduction des composés des métaux précieux sous hydrogène lors de la fabrication de ces catalyseurs.

Poursuivant ses travaux, la demanderesse a trouvé qu'il s'avère particulièrement avantageux d'introduire dans la solution d'imprégnation des métaux précieux de la mine du platine, un composé organique inerte à froid mais capable de réduire les précurseurs des métaux précieux au moment de la calcination finale sans réduire les métaux de base dont le cérium (ce composé sera ci-après appelé «réducteur retard»). L'introduction de ce réducteur retard permet d'éviter la réduction sous hydrogène ou dans des gaz de combustion réducteurs des catalyseurs, ce qui constitue un avantage économique certain, elle conduit en outre à l'obtention de catalyseurs possédant une excellente activité initiale.

Il est par ailleurs connu d'après le brevet français FR-A 2 196 195 d'opérer la réduction de petites quantités de catalyseurs avec des composés plus réducteurs que l'hydrogène tels que l'hydrazine, cela à une température comprise entre 80 et 250°C et de préférence 100 et 200°C. Le procédé décrit dans ce brevet ne permet pas, selon ses auteurs, de traiter de grandes quantités de catalyseurs; par ailleurs, les agents de réduction mis en œuvre sont très puissants et réduisent notamment l'oxyde de cérium ($CeO_2$) lorsque celui-ci est présent dans la phase active; il s'ensuit que les catalyseurs préparés par ce procédé ne possèdent pas une activité initiale suffisante.

La présente invention concerne en effet un procédé de fabrication de catalyseur pour le traitement des gaz d'échappement des moteurs à combustion interne comportant un support revêtu et/ou imprégné d'au moins un métal du groupe du platine et d'au moins un métal de base dont le cérium, caractérisé en ce que:

— dans une première étape, on introduit le ou les précurseurs des métaux de base,

— dans une deuxième étape, on effectue une activation en atmosphère neutre ou oxydante à une température comprise entre 120°C et 800°C,

— dans une troisième étape, on introduit le ou les précurseurs des métaux précieux du groupe du platine et un réducteur retard susceptible d'opérer la réduction des précurseurs des métaux précieux lors de la quatrième étape,

— dans une quatrième étape, on active le catalyseur en atmosphère neutre ou oxydante à une température comprise entre 300°C et 800°C.

Selon le procédé de l'invention, les «réducteurs retards» introduits simultanément avec les métaux précieux du groupe du platine sont choisis de préférence parmi le groupe comportant: l'éthylène glycol (1,2-éthane diol), le butylène glycol (1,3-butane diol), le tétraméthylène glycol (1,4 butane diol), l'isoamylène glycol (1,3 butane diol-3 méthyl), le triméthylène glycol (1,3 propane diol), le propylène glycol (1,2 propane diol), le glycérol (propane triol), le saccharose, l'alcool tétrahydrofurfurylique, le phénol (hydroxybenzène), le furfurol (méthanol, 2 furyl-), l'alcool benzylique (toluène α hydroxy-), l'alcool hexahydrobenzylique, l'orthocrésol (toluène, 2 hydroxy-), le diacétate d'éthylène glycol, le glucose, l'amidon, l'éthanol-2 allyloxy (glycol monoallyl éther), l'éthanol-2 butoxy (glycol monobutyl éther), le 4 méthyl-1,3 dioxolan-2-one, le diacétate de 1,2 propane diol, le diacétate de 1,3 propane diol, la diacétine (1,3 diacétate de glycol), le glycérol-1,2, diméthyl éther (2,3 diméthoxy-1 propanol), l'α monoacétine, l'α monobutyrine.

Le support mis en œuvre selon le procédé de l'invention peut être soit sous forme particulaire, soit sous forme d'une couche d'oxyde recouvrant un substrat métallique ou céramique.

Les supports particulaires que l'on peut utiliser sont notamment ceux choisis parmi: la silice, l'alumine, les alumino-silicates ou les oxydes mixtes comprenant par exemple de l'alumine associée avec de la silice, de l'oxyde de zirconium, de l'oxyde de cérium et/ou de l'oxyde de titane.

Selon un mode de mise en œuvre préféré de l'invention, on utilise un support particulaire à base d'alumine. Ce support présente de préférence une surface spécifique comprise entre 25 et 250 m²/g et plus particulièrement comprise entre 70 et 150 m²/g. Il présente un volume poreux total de préférence compris entre 0,5 et 2 cm³/g et plus particulièrement compris entre 0,8 et 1,7 cm³/g. Il possède de préférence une macroporosité telle que le volume poreux de pore dont le diamètre est supérieur à 1000 Å est compris entre environ 0,05 et 0,6 cm³/g et plus particulièrement entre 0,2 et 0,5 cm³/g.

De tels supports peuvent notamment avoir été fabriqués à partir de l'alumine active obtenue selon le procédé décrit dans le brevet américain US-A 2 915 365 et agglomérés selon le procédé décrit dans le brevet américain US-A 2 881 051. Ils peuvent également avoir été fabriqués par autoclavage en milieu neutre ou acide des agglomérés précédents, séchage et calcination, notamment tels que décrits dans les brevets français FR-A 1 449 904 et 1 386 364.

Les supports mis en œuvre peuvent également avoir été obtenus selon le procédé décrit dans la demande de brevet français FR-A 2 399 276 ou la demande française 82 8774 (FR-A 2 527 197).

Les supports d'alumine mis en œuvre peuvent également avoir été fabriqués selon le procédé décrit dans les demandes de brevet européen EP-A 15 801 et 55 164 au nom de Rhône-Poulenc.

D'une manière générale, les supports à base de particules d'alumine mis en œuvre selon l'invention peuvent avoir été traités, ainsi qu'il est bien connu de l'homme de l'art, par des agents porogènes tels que ceux à base de cellulose, naphtaline, gomme naturelle, polymères synthétiques, etc., afin de leur conférer les propriétés de porosité désirées.

Selon le procédé de l'invention, on peut également mettre en œuvre des supports constitués par un ou plusieurs oxydes recouvrant un substrat métallique ou céramique, ledit substrat étant de préférence sous la forme d'une structure monolithique et rigide comprenant des canaux ou conduits. De tels supports sont bien connus de l'homme de l'art et ont été largement décrits dans la littérature, les oxydes étant de préférence employés sous la forme d'une pellicule ou d'un revêtement appliqué sur le substrat.

Les oxydes constituant le revêtement sont notamment choisis parmi le groupe comportant les oxydes d'aluminium, magnésium, calcium, strontium, baryum, scandium, yttrium, lanthanides, gallium, silicium, titane, zirconium, hafnium, thorium, niobium, tantale, chrome, fer, tungstène, manganèse, étain. On utilise de préférence un revêtement en oxyde d'aluminium.

Les substrats métalliques utilisés sont notamment ceux obtenus à partir d'alliages de fer, de nickel, de chrome, ou ceux obtenus à partir de fer, de chrome, d'aluminium et de cobalt tels que ceux connus sous la marque «KANTAL» ou ceux obtenus à partir d'alliages de fer, de chrome, d'aluminium et d'yttrium et connus sous la marque «FECRALLOY». Le métal peut aussi être de l'acier carboné ou de la fonte simple.

On peut avantageusement traiter les substrats métalliques à base d'aluminium par chauffage en atmosphère oxydante dans des conditions de durée et de température qui permettent de former, à partir de l'aluminium contenu dans l'alliage, une couche superficielle d'oxyde d'aluminium. Dans le cas des aciers carbonés ou de la fonte, on peut également les prétraiter par recuit du fer ou de l'acier recouvert d'une couche d'aluminium pour obtenir un revêtement d'une couche d'aluminium pour obtenir un revêtement d'une couche de diffusion aluminium/fer.

Les substrats en matière céramique utilisés sont notamment ceux comportant comme matière principale: la cordiérite, l'alumine, la mullite, la zircone, la zicomullite, le titanate de baryum, la porcelaine, l'oxyde de thorium, l'oxyde de magnésium, la stéatite, les carbures de bore ou du silicium. Selon un mode de mise en œuvre préféré de l'invention, on peut obtenir le revêtement en oxyde d'aluminium de ces substrats céramiques ou métalliques par application d'hydrate d'alumine puis calcination ou par dépôt d'un sel d'aluminium puis calcination ou par application d'une couche d'alumine active plus calcination.

La structure cellulaire peut être de forme hexagonale, tétragonale, triangulaire ou ondulée. Elle doit permettre le passage de gaz dans les canaux ou conduits formés lors de leur fabrication par extrusion, laminage, solidification d'éléments en forme de feuille, etc.

Par ailleurs, les supports mis en œuvre selon le procédé de l'invention sont avantageusement traités de façon à leur conférer une bonne stabilité thermique au cours du temps. Ces traitements, bien connus de l'homme de l'art, consistent notamment dans une stabilisation de la particule d'alumine ou du revêtement en oxyde d'aluminium par les métaux alcalino-terreux, la silice et/ou les terres rares.

Les supports stabilisés décrits dans les brevets français FR-A 2 257 335 et 2 290 950 au nom de Rhône-Poulenc Industries conviennent aux fins de l'invention.

Les métaux du groupe du platine que l'on peut mettre en œuvre selon l'invention sont choisis parmi: le platine, le rhodium, le ruthénium, le palladium et l'iridium.

Dans les catalyseurs de l'invention, la teneur totale en métal du groupe du platine varie généralement entre environ 0,02 et 0,5% en poids par rapport au support. Selon le mode de mise en œuvre préféré de l'invention, la teneur en platine et palladium du catalyseur varie généralement entre environ 0,02 et 0,4% en poids par rapport au support et de préférence entre 0,04 et 0,25% en poids; celle du métal du groupe constitué par l'iridium et le rhodium varie généralement entre environ 0 et 0,1% en poids et de préférence entre environ 0,002 et 0,02% en poids par rapport au support.

Dans les catalyseurs selon l'invention, le ou les métaux du groupe du platine sont associés à un ou plusieurs métaux de base, dont le cérium. Ces métaux de base sont choisis parmi au moins un des métaux suivants: le cobalt, le zinc, le manganèse, le nickel, le tungstène, le fer, le cuivre, le néodyme, le praséodyme, le rhénium, le chrome, le zirconium, le lanthane, l'étain, le calcium, le strontium, le baryum, l'yttrium, le magnésium, le titane, le gallium.

On met de préférence en œuvre les compositions comportant les métaux de base suivants:

— le fer et le cérium,
— le manganèse et le cérium et le fer,
— le cérium et le fer et le gallium et/ou l'yttrium,
— le cérium et le fer et le baryum et/ou le magnésium et/ou l'yttrium.

La teneur totale en métal de base rapportée au support est généralement comprise entre 0,1 et 11% en poids.

Selon le premier mode de réalisation préféré de l'invention, lorsque l'on met en œuvre comme métaux de base le fer et le cérium, la teneur en fer est comprise entre environ 0,1 et 3,5% en poids par rapport au support et plus particulièrement entre 0,5 et 2%; la teneur en cérium est comprise entre environ 0,3 et 7,5% et de préférence entre 0,5 et 5,5% en poids par rapport au support.

Selon un deuxième mode de réalisation préféré de l'invention, lorsque les métaux de base sont constitués par le manganèse et le cérium et le fer, la teneur totale en cérium et fer est comprise entre 0,1 et 11% en poids rapporté au support et de préférence entre 0,5 et 7,5%; la teneur en manganèse est comprise entre 0,1 et 4% et de préférence entre 0,1 et 2%; la quantité de manganèse et de fer et de cérium est inférieure à 15% et de préférence à 9,5% en poids par rapport au support.

Selon un troisième mode de réalisation préféré, lorsque les métaux de base sont constitués par le cérium, le fer, le gallium et/ou l'yttrium, la teneur totale en cérium et fer des catalyseurs est comprise entre environ 0,1 et 11% en poids rapporté au support et de préférence entre 0,5 et 7,5%; la teneur en gallium est comprise entre 0,01 et environ 10% en poids et de préférence entre 0,01 et 2%; la teneur en yttrium est comprise entre 0,01 et 10% et de préférence entre 0,01 et 2%.

Selon un quatrième mode de réalisation préféré, lorsque les métaux de base sont constitués par le cérium, le fer, le baryum et/ou le magnésium et/ou l'yttrium, la teneur totale en cérium et fer des catalyseurs est comprise entre 0,1 et 11% en poids par rapport au support et de préférence entre 0,5 et 7,5%, la teneur en baryum et/ou magnésium et/ou yttrium est comprise entre 0,01 et 3,5% et de préférence entre 0,01 et 2%.

Selon le procédé de l'invention, dans une première étape, on introduit les métaux de base dont le cérium. Selon une variante de l'invention, on peut introduire également, lors de la première étape, une partie ou la totalité du palladium.

Les métaux de base, et éventuellement le palladium, peuvent être introduits dans le support par toute méthode et, en particulier, imprégnation, cogélification, coprécipitation, etc. On opère de préférence par imprégnation du support avec une solution contenant des composés du palladium et des métaux de base. Comme composés, on citera tous les sels solubles des métaux considérés. Comme composés du palladium, on mettra notamment en œuvre le chlorure de palladium, le nitrate de palladium, le dichlorure de palladium II tétramine, etc. Dans un mode de mise en œuvre préféré de l'invention, les sels de fer et de cérium mis en œuvre seront notamment choisis parmi le nitrate ferrique, le citrate de fer ammoniacal, le chlorure ferrique, le nitrate céreux, l'acétate céreux, le chlorure céreux et le nitrate cérique ammoniacal.

Selon une variante du procédé de l'invention, on peut introduire au moins une partie du réducteur retard lors de cette première étape; cependant, on préfère introduire le réducteur retard lors de la troisième étape lors de l'introduction des métaux précieux afin de réduire le platine et/ou le rhodium.

Selon la deuxième étape du procédé de l'invention, on active le support revêtu et/ou imprégné provenant de la première étape; la température d'activation est comprise entre environ 120 et 800°C. Au sens de l'invention, on entend par activation un traitement thermique constitué d'un séchage en atmosphère neutre ou oxydante suivi éventuellement d'une calcination en atmosphère neutre ou oxydante, l'atmosphère oxydante étant généralement l'air.

Dans une troisième étape, selon le procédé de l'invention, on introduit le ou les précurseurs des métaux précieux du groupe du platine et un réducteur retard susceptible d'opérer la réduction des précurseurs des métaux précieux lors de la quatrième étape. Cette introduction est faite par imprégnation de composés solubles des précurseurs des métaux précieux. Dans le mode de mise en œuvre préféré, on utilise comme précurseurs: le trichlorure de rhodium hydraté, l'acide chloroplatinique, le dichlorure de rhodium III chloropentamine et le dichlorure de platine II tétramine, l'acide bromo-platinique, le nitrate de rhodium et l'acide hexachloro-iridique, le nitrate de palladium, le chlorure de palladium, le dichlorure de palladium II tétramine.

Ainsi qu'il est bien connu de l'homme de l'art, la profondeur d'imprégnation peut être avantageusement réglée par l'utilisation d'ajout d'une certaine quantité d'un acide minéral ou organique à la solution des métaux précieux. On utilise couramment les acides nitrique, phosphorique, chlorydrique et fluorhydrique ou les acides acétique, citrique, oxalique, etc.

Le rapport entre le nombre de moles de réducteur retard et le nombre total d'atomes-grammes de métaux précieux introduits est compris entre 0,1 et 1000 et de préférence entre 10 et 200.

Dans une quatrième étape du procédé de l'invention, on active le catalyseur en atmosphère neutre ou oxydante à une température comprise entre 300 et 800°C environ. L'activation est de préférence effectuée à une température comprise entre 300 et 400°C pendant un temps compris entre 5 minutes et 10 heures et de préférence 15 minutes et 5 heures.

Les catalyseurs selon l'invention ainsi préparés possèdent une activité initiale considérablement améliorée pour éliminer les composés nocifs contenus dans les gaz d'échappement et, en particulier, l'oxyde de carbone, les hydrocarbures imbrûlés, ainsi que les oxydes d'azote présents dans ceux-ci.

Au sens de l'invention, on entend par catalyseur possédant une activité initiale considérablement améliorée, des catalyseurs qui possèdent les propriétés suivantes:

1) Ils catalysent l'oxydation du monoxyde de carbone et des hydrocarbures imbrûlés et la réduction des oxydes d'azote, dès leur mise en œuvre sur un véhicule, sans qu'il soit nécessaire de procéder à une phase préalable de conditionnement sur le véhicule lui-même.

2) Ils catalysent l'oxydation du monoxyde de carbone et de l'éthylène, en présence d'un excès d'oxygène, à partir de 130°C. La température pour laquelle le catalyseur convertit 50% du monoxyde de carbone et 50% de l'éthylène est inférieure à 149°C.

Ces catalyseurs possédant une activité initiale considérablement améliorée se caractérisent en ce que:

— ils sont constitués de particules de métaux précieux dont la taille moyenne est faible, de quelques nanomètres: 0,5 à 2 nm, telles que celles observées par microscopie électronique à transmission sur des répliques extractives;

— les petits agrégats de métaux précieux n'adsorbent pratiquement pas le monoxyde de carbone à température ambiante.

Les exemples ci-après illustrent l'invention sans en limiter la portée.

Exemple 1:

Préparation d'un catalyseur (A) de l'art antérieur
On prépare 100 g de billes d'alumine selon le procédé décrit dans la demande brevet français N° 79 04810 (FR-A 2449474)

Ces billes présentent une surface spécifique de 100 m²/g, un volume poreux total de 1,20 cm³/g et un volume de 0,45 cm³/g constitué par des macropores ayant un diamètre supérieur à 1000 Å.

Ces billes sont imprégnées par 120 cm³ d'une solution aqueuse de nitrate céreux contenant 5,5 g de cérium.

Après 30 minutes de contact, les billes sont séchées à 150° C puis calcinées sous air à 550° C pendant 3 heures.

Elles sont ensuite imprégnées par 110 cm³ d'une solution d'acide hexachloroplatinique, de trichlorure de rhodium hydraté contenant 150 mg de platine et 10 mg de rhodium.

Après 30 minutes de contact, les billes sont séchées à 150°C puis calcinées à 350°C pendant 3 heures dans un courant d'air circulant à 200 litres par heure.

Le catalyseur (A) ainsi préparé contient en poids rapporté au support 0,150% de platine, 0,010% de rhodium et 5,5% de cérium.

Exemple 2:

Préparation d'un catalyseur (B) de l'art antérieur
100 g de billes d'alumine telles que décrites à l'exemple 1 sont imprégnées par 120 cm³ d'une solution aqueuse de nitrate de fer, de nitrate de cérium, de nitrate de cuivre et de nitrate de palladium contenant 1,0 g de fer, 3,0 g de cérium, 0,5 g de cuivre et 50 mg de palladium.

Après 30 minutes de contact, les billes sont séchées à 150° C puis calcinées sous air à 550° C pendant 3 heures. Elles sont ensuite imprégnées par 110 cm³ d'une solution d'acide hexachloroplatinique et de trichlorure de rhodium contenant 100 mg de platine et 10 mg de rhodium.

Le catalyseur est ensuite traité comme à l'exemple 1.

Le catalyseur (B) ainsi préparé contient en poids rapporté au support 0,100% de platine, 0,050% de palladium, 0,010% de rhodium, 1% de fer, 3% de cérium et 0,5% de cuivre.

Exemple 3:

Préparation d'un catalyseur (C) de l'art antérieur
100 g de billes d'alumine telles que décrites à l'exemple 1 sont imprégnées comme à l'exemple 2 par 120 cm³ d'une solution aqueuse de nitrate ferrique et de nitrate céreux contenant 1,3 g de fer et 4,0 g de cérium, puis par 110 cm³ d'une solution d'acide hexachloroplatinique et de trichlorure de rhodium hydraté contenant 150 mg de platine et 10 mg de rhodium. Le catalyseur est ensuite traité comme à l'exemple 1.

Le catalyseur (C) ainsi préparé contient en poids rapporté au support 0,150% de platine, 0,010% de rhodium, 1,3% de fer et 4,0% de cérium.

Exemple 4:

Préparation d'un catalyseur (D) de l'art antérieur (FR-A 2 196 195)
100 g de billes d'alumine telles que décrites à l'exemple 1 sont imprégnées comme à l'exemple 3 par 120 cm³ d'une solution aqueuse de nitrate de fer et de nitrate de cérium contenant 1,3 g de fer et 4 g de cérium.

Après 30 minutes de contact, les billes sont séchées à 150° C puis calcinées sous air à 550° C pendant 3 heures.

Elles sont ensuite imprégnées par 110 cm³ d'une solution d'acide hexachloroplatinique et de trichlorure de rhodium hydraté contenant 150 mg de platine et 1,0 mg de rhodium et de formaldéhyde 0,011 mole en solution à 37% dans l'eau (formaline).

Après 30 min de contact, les billes sont séchées à 150° C puis activées à 130° C pendant 3 h.

Le catalyseur (D) ainsi préparé qui est le meilleur selon le FR 2 196 195 contient en poids rapporté au support: 0,150% de platine, 0,010% de rhodium, 1,3% de fer et 4,0% de cérium.

*Exemple 5:*

*Préparation d'un catalyseur (E) de l'art antérieur*
On prépare une suspension dans l'eau d'alumine convenant au revêtement d'une structure monolithe céramique de 1,7 litre, présentant 400 cellules par Square inch (62 cellules par cm²).

Le monolithe de 1,7 litre est plongé dans la suspension à pH = 3,5 contenant 30% en poids d'alumine.

Le support précédemment cité est égoutté et séché pour que les canaux soient vidés, puis il est calciné à 600°C durant 3 heures. Le monolithe ainsi revêtu est immergé dans une solution aqueuse de nitrate ferrique, de nitrate de cérium et de nitrate de baryum pendant 30 minutes, puis il est égoutté et séché à 150°C et calciné à 550°C durant 3 heures. Les concentrations en nitrate ferrique, en nitrate de cérium et en nitrate de baryum dans la solution sont telles que, après immersion et calcination, le monolithe contient 1,0% en poids de fer, 3,0% en poids de cérium et 1,6% en poids de baryum.

Le substrat est ensuite imprégné par trempage dans une solution aqueuse d'acide chloroplatinique et de trichlorure de rhodium hydraté.

Les concentrations en acide hexachloroplatinique et en trichlorure de rhodium hydraté sont telles que le monolithe est imprégné par 150 mg de platine, 10 mg de rhodium. Après 30 minutes de contact, le monolithe est égoutté, soufflé et séché à 150°C puis activé à 350°C pendant 3 heures dans un four de calcination.

Le catalyseur (E) ainsi préparé contient en poids rapporté au support: 0,150% de platine, 0,010% de rhodium, 1,0% de fer, 3,0% de cérium et 1,0% de baryum.

*Exemple 6:*

*Préparation d'un catalyseur (F) de l'art antérieur*
On prépare une suspension dans l'eau d'alumine convenant au revêtement d'une structure monolithe métallique fabriquée à partir d'une feuille métallique connue sous la marque FECRALLOY.

Le mode opératoire utilisé pour l'imprégnation est semblable à celui décrit dans l'exemple 7. On utilise cette fois une solution aqueuse de nitrate de cérium, de nitrate de palladium et de nitrate de manganèse dont les concentrations sont telles qu'après immersion et calcination, le monolithe de 1,4 litre contient 3,5% en poids de cérium, 0,030% en poids de palladium et 0,5% de manganèse. Le substrat est ensuite imprégné par trempage dans une solution aqueuse d'acide chloroplatinique de trichlorure de rhodium hydraté.

Les concentrations en acide hexachloroplatinique et en trichlorure de rhodium hydraté sont telles que le monolithe est imprégné par 70 mg de platine et 7 mg de rhodium.

Après 30 minutes de contact, le monolithe est égoutté et séché à 150°C puis activé à 350°C pendant 3 heures dans un four de calcination.

Le catalyseur (F) ainsi préparé contient en poids rapporté au support 0,070% de platine, 0,030% de palladium, 0,007% de rhodium, 3,5% de cérium et 0,5% de manganèse.

*Exemple 7:*

*Préparation d'un catalyseur (G) selon l'invention*
100 g de billes d'alumine telles que décrites à l'exemple 1 sont imprégnées par 120 cm³ d'une solution aqueuse de nitrate céreux contenant 5,5 g de cérium.

Après 30 minutes de contact, les billes sont séchée à 150°C puis calcinées sous air à 550°C pendant 3 heures.

Elles sont ensuite imprégnées par 110 cm³ d'une solution d'acide hexachloroplatinique, de trichlorure de rhodium hydraté et de furfurol contenant 150 mg de platine, 10 mg de rhodium et 10 g de furfurol.

Après 30 minutes de contact, les billes sont séchées à 150°C puis calcinées à 350°C pendant 3 heures dans un courant d'air circulant à 200 litres par heure.

Le catalyseur (G) ainsi préparé contient en poids rapporté au support 0,150% de platine, 0,010% de rhodium et 5,5% de cérium.

*Exemple 8:*

*Préparation d'un catalyseur (H) selon l'invention*
100 g de billes d'alumine telles que décrites à l'exemple 1 sont imprégnées par 120 cm³ d'une solution aqueuse de nitrate de fer, de nitrate de cérium, de nitrate de cuivre et de nitrate de palladium contenant 1,0 g de fer, 3,0 g de cérium, 0,5 g de cuivre et 50 mg de palladium.

Après 30 minutes de contact, les billes sont séchées à 150°C puis calcinées sous air à 550°C pendant 3 heures. Elles sont ensuite imprégnées par 110 cm³ d'une solution d'acide hexachloroplatinique, de trichlorure de rhodium et de diacétate d'éthylène glycol contenant 100 mg de platine, 10 mg de rhodium et 22 g de diacétate d'éthylène glycol.

Le catalyseur est ensuite traité comme à l'exemple 1.

Le catalyseur (H) ainsi préparé contient en poids rapporté au support 0,100% de platine, 0,050% de palladium, 0,010% de rhodium, 1% de fer, 3% de cérium et 0,5% de cuivre.

*Exemple 9:*

*Préparation d'un catalyseur (I) selon l'invention*
100 g de billes d'alumine telles que décrites à l'exemple 1 sont imprégnées comme à l'exemple 3 par 120 cm³ d'une solution aqueuse de nitrate ferrique et de nitrate céreux contenant 1,3 g de fer et 4,0 g de cérium, puis par 110 cm³ d'une solution d'acide hexachloroplatinique, de trichlorure de rhodium hydraté et d'éthylène glycol contenant 150 mg de platine, 10 mg de rhodium et 6,2 g de glycol.

Après 30 minutes de contact, les billes sont ensuite activées à 350°C pendant 3 heures en atmosphère oxydante dans un four de calcination.

Le catalyseur (I) ainsi préparé contient en poids rapporté au support 0,150% de platine, 0,010% de rhodium, 1,3% de fer et 4,0% de cérium.

*Exemple 10:*

*Préparation d'un catalyseur (J) selon l'invention*

100 g de billes d'alumine telles que décrites à l'exemple 1 sont imprégnées comme à l'exemple 3 par 120 cm³ d'une solution aqueuse de nitrate de fer et de nitrate de cérium contenant 1,3 g de fer et 4 g de cérium.

Après 30 minutes de contact, les billes sont séchées à 150°C puis calcinées sous air à 550°C pendant 3 heures.

Elles sont ensuite imprégnées par 110 cm³ d'une solution d'acide hexachloroplatinique, de trichlorure de rhodium hydraté et de glycérol contenant 150 mg de platine, 10 mg de rhodium et 6,2 g de glycérol.

Après 30 minutes de contact, les billes sont activées à 350°C pendant 3 heures en atmosphère oxydante dans un four de calcination.

Le catalyseur (J) ainsi préparé contient en poids rapporté au support: 0,150% de platine, 0,010% de rhodium, 1,3% de fer et 4,0% de cérium.

*Exemple 11:*

*Préparation d'un catalyseur (K) selon l'invention*

On prépare une suspension dans l'eau d'alumine convenant au revêtement d'une structure monolithe céramique de 1,7 litre, présentant 400 cellules par square inch.

Le monolithe de 1,7 litre est plongé dans la suspension à pH = 3,5 contenant 30% en poids d'alumine.

Le support précédemment cité est égoutté et séché pour que les canaux soient vides, puis il est calciné à 600°C durant 3 heures. Le monolithe ainsi revêtu est immergé dans une solution aqueuse de nitrate ferrique, de nitrate de cérium et de nitrate de baryum pendant 30 minutes, puis il est égoutté et séché à 150°C et calciné à 550°C durant 3 heures. Les concentrations en nitrate ferrique, en nitrate de cérium et en nitrate de baryum dans la solution sont telles que, après immersion et calcination, le monolithe contient 1,0% en poids de fer, 3,0% en poids de cérium et 1,6% en poids de baryum.

Le substrat est ensuite imprégné par trempage dans une solution aqueuse d'acide hexachloroplatinique de trichlorure de rhodium hydraté et d'éthylène glycol (1,2 éthane diol).

Les concentrations en acide chloroplatinique, en trichlorure de rhodium hydraté et éthylène glycol sont telles que le monolithe est imprégné par 150 mg de platine, 10 mg de rhodium et 30 g d'éthylène glycol.

Après 30 minutes de contact, le monolithe est égoutté, soufflé et séché à 150°C puis activé à 350°C pendant 3 heures en atmosphère oxydante dans un four de calcination.

Le catalyseur (K) ainsi préparé contient en poids rapporté au support: 0,150% de platine, 0,010% de rhodium, 1,0% de fer, 3,0% de cérium et 1,0% de baryum.

*Exemple 12:*

*Préparation d'un catalyseur (L) selon l'invention*

On prépare une suspension dans l'eau d'alumine convenant au revêtement d'une structure monolithe métallique fabriquée à partir d'une feuille métallique connue sous la marque FECRALLOY.

Le mode opératoire utilisé pour l'imprégnation est semblable à celui décrit dans l'exemple 8. On utilise cette fois une solution aqueuse de nitrate de cérium, de nitrate de palladium et de nitrate de manganèse dont les concentrations sont telles qu'après immersion et calcination le monolithe de 1,4 litre contient 3,5% en poids de cérium, 0,03% en poids de palladium et 0,5% de manganèse. Le substrat est ensuite imprégné par trempage dans une solution aqueuse d'acide hexachloroplatinique de trichlorure de rhodium hydraté et d'alcool benzylique.

Les concentrations en acide chloraplatinique et en trichlorure de rhodium hydraté sont telles que le monolithe est imprégné par 70 mg de platine, 7 mg de rhodium et 27 g d'alcool benzylique.

Après 30 minutes de contact, le monolithe est égoutté et séché à 150°C puis activé à 350°C pendant 3 heures en atmosphère oxydante dans un four de calcination.

Le catalyseur (L) ainsi préparé contient en poids rapporté au support 0,070% de platine, 0,030% de palladium, 0,007% de rhodium, 3,5% de cérium et 0,5% de manganèse.

*Exemple 13:*

*Chimisorption du monoxyde de carbone et mesure de la dispersion des métaux précieux par microscopie électronique à transmission sur les divers catalyseurs*

Le présent exemple rassemble les résultats obtenus pour la chimisorption du monoxyde de carbone et les tailles des particules des métaux précieux déterminés par microscopie électronique à transmission avec les divers catalyseurs (A), (B), (C), (D), (G), (H), (I), et (J) décrits respectivement dans les exemples 1, 2, 3, 4, 7, 8, 9 et 10

1) *Les conditions du test de chimisorption du monoxyde de carbone sont les suivantes:*

On réduit d'abord le catalyseur à 350°C sous un courant d'hydrogène. On élimine l'hydrogène adsorbé sur le catalyseur en le balayant par un courant d'argon très pur à la même température. Le solide ainsi obtenu est ramené à la température ambiante, toujours sous un balayage d'argon très pur. En amont du catalyseur, on introduit, dans le courant d'argon (1,8 l/h), des volumes connus de monoxyde de carbone.

La chimisorption s'effectuant en dynamique, on utilise une cellule de mesure à conductivité thermique pour déterminer l'évolution de la quantité de monoxyde de carbone résiduelle dans le gaz porteur. La surface du «pic» de CO obtenue est proportionnelle à la quantité de CO qui reste dans l'effluent gazeux. Les injections successives de CO sont poursuivies jusqu'à obtention de pics ayant la même surface. Cette surface qui correspond au volume de CO introduit à chaque injection est prise comme référence.

Si $n$ — est le nombre d'injections avant d'obtenir les pics à «surface constante»

$v$ — le volume injecté à chaque fois en cm³

$S_i$ — la surface de la nième injection

$S$ — la surface du pic invariant

$W$ — le poids du catalyseur

la quantité de CO fixé par le catalyseur est en cm³/g

$$\frac{nS - \sum_1^n S_i}{S \times W} \times (TPN)$$

le volume injecté ramené aux conditions normales de température et de pression (TPN) est:

$$\sqrt{(TPN)} = \sqrt{\frac{T° \times 760 \times 273}{P \times (273 + T°)}}$$

2) *Mesure de la dispersion des métaux précieux par examen au microscope électronique à transmission des catalyseurs après chimisorption du monoxyse de carbone*

L'examen direct des catalyseurs à faible teneur en métaux précieux (environ 0,15%) ne permet pas d'observer les particules métalliques. Par conséquent, l'examen au microscope électronique à transmission des catalyseurs (A), (B), (C), (D), (G), (H), (I), et (J) décrits respectivement dans les exemples 1, 2, 3, 4, 7, 8, 9 et 10 a été réalisé sur des répliques extractives obtenues par dissolution du support dans l'acide fluorhydrique à 1% dans les conditions décrites dans la publication de G. Dalmai-Imelik, C. Leclercq et I. Mutin, Journal de microscopie *20*, N° 2, 1974, p. 123-132.

Sur tous les catalyseurs on observe une série de cristallites métalliques dont la taille varie de 25 à 80 Å (2,5 à 8 mm). La taille moyenne estimée pour chaque préparation sur une centaine de particules reportée dans le tableau ci-après rassemble les résultats obtenus avec les divers catalyseurs.

3) *Résultats obtenus avec les catalyseurs (A), (B), (C), (D), (G), (H), (I) et (J) pour la chimisorption du monoxyde de carbone et couleurs des tailles moyennes des particules des métaux précieux estimées par microscopie électronique sur réplique extractives:*

| | N° de l'exemple | Référence du catalyseur | Quantité de monoxyde de carbone chimisorbé par le catalyseur cm³/g mesuré dans les conditions TPN | Taille moyenne des particules métalliques observées par microscopie en nanomètres |
|---|---|---|---|---|
| Art antérieur | 1 | A | 0,146 | 1,4 |
| | 2 | B | 0,155 | 1,6 |
| | 3 | C | 0,140 | 1,7 |
| | 4 | D | 0,103 | 2,5 |
| Invention | 7 | G | 0,027 | 1,8 |
| | 8 | H | 0,020 | 1,5 |
| | 9 | I | 0,009 | 1,2 |
| | 10 | J | 0,011 | 1,4 |

*Exemple 14:*

*Activité oxydante initiale des catalyseurs pour la conversion du monoxyde de carbone et de l'éthylène*

La procédure utilisée consiste à porter les catalyseurs sous azote à 593°C pendant 30 minutes, à refroidir ces catalyseurs sous un mélange synthétique de gaz contenant 1% de monoxyde de carbone, 0,15% d'éthylène, 3% d'oxygène, complément $N_2$ – VVH 10 000 h$^{-1}$, puis à mesurer la température minimale permettant d'oxyder 50% du monoxyde de carbone et 50% de l'éthylène.

Le dosage de ces composés est effectué entre 593°C et 50°C par les techniques habituelles suivantes:

— CO: absorption infra-rouge (analyseur COSMA Rubis 3000)

— HC: analyse par ionisation de flamme (analyseur IPM)

Le tableau ci-après rassemble les résultats obtenus avec les catalyseurs (A), (B), (C), (D), (E), (F), (G), (H), (I), (J), (K) et (L) décrits respectivement dans les exemples 1 à 12.

*(Tableau en page suivante)*

*Exemple 15:*

*Activité initiale des catalyseurs pour l'élimination du monoxyde de carbone et de l'oxyde d'azote dans les gaz d'échappement d'un moteur réglé à la richesse un*

La procédure consiste à envoyer sur un volume de catalyseur de 500 cm³ contenu dans un réacteur cylindrique à écoulement axial (⌀ 100 mm, h 64 mm) des gaz provenant de l'échappement d'un moteur à combustion interne à allumage commandé réglé pour fonctionner à la richesse 1 (tension de la sonde à oxygène placée dans les gaz à la sortie du moteur égale à 600 mV). Un dispositif

| | N° de l'exemple | Référence du catalyseur | Température minimale d'entrée des gaz pour 50% de conversion | |
|---|---|---|---|---|
| | | | du monoxyde de carbone | de l'éthylène |
| Art antérieur | 1 | A | 225 | 245 |
| | 2 | B | 186 | 186 |
| | 3 | C | 232 | 270 |
| | 4 | D | 223 | 250 |
| | 5 | E | 220 | 240 |
| | 6 | F | 205 | 210 |
| Invention | 7 | G | 135 | 148 |
| | 8 | H | 108 | 108 |
| | 9 | I | 138 | 138 |
| | 10 | J | 125 | 125 |
| | 11 | K | 132 | 135 |
| | 12 | L | 145 | 149 |

de chauffage électrique permet d'ajuster la température des gaz à exactement 450°C au niveau de l'entrée du pot catalytique. Un circuit de dérivation permet de n'envoyer les gaz sur le catalyseur que après avoir obtenu des conditions de marche stabilisées du moteur.

Le débit des gaz d'échappement passant sur le catalyseur est de 25 Nm³/heure. Ces gaz contiennent initialement 3200± ppm de NO (analyse par chimiluminescence) et 0,49 ± 0,01% de CO (analyse par absorption de rayonnement infra-rouge).

Le tableau ci-dessous rassemble les résultats obtenus avec les catalyseurs (A), (B), (C), (D), (E), (F), (G), (H), (I), (J), (K) et (L) décrits respectivement dans les exemples 1 à 12, tels qu'issus de la fabrication sans aucun autre préconditionnement.

| | Numéro de l'exemple | Réf. du catalyseur | Pourcentage de CO éliminé après | | | Pourcentage de NO$_x$ éliminé après | | |
|---|---|---|---|---|---|---|---|---|
| | | | 10 min | 30 min | 60 min | 10 min | 30 min | 60 min |
| Art antérieur | 1 | A | 34 | 51 | 53 | 44 | 55 | 58 |
| | 2 | B | 48 | 59 | 61 | 51 | 62 | 63 |
| | 3 | C | 36 | 54 | 55 | 48 | 58 | 61 |
| | 4 | D | 37 | 45 | 58 | 35 | 53 | 58 |
| | 5 | E | 35 | 50 | 61 | 38 | 57 | 60 |
| | 6 | F | 30 | 47 | 53 | 34 | 52 | 59 |
| Invention | 7 | G | 70 | 77 | 78 | 80 | 87 | 89 |
| | 8 | H | 79 | 80 | 81 | 88 | 93 | 93 |
| | 9 | I | 83 | 84 | 84 | 90,5 | 95,5 | 96 |
| | 10 | J | 90 | 90 | 90 | 93 | 95 | 97 |
| | 11 | K | 89 | 91 | 91 | 92 | 96 | 97,5 |
| | 12 | L | 76 | 77 | 78 | 87,5 | 92 | 93 |

*Exemple 16:*

*Activité initiale des catalyseurs pour l'élimination du monoxyde de carbone, des hydrocarbures imbrûlés et des oxydes d'azote dans les gaz d'échappement d'un véhicule*

Le véhicule utilisé pour ces essais est une Renault 18 type USA équipée d'un moteur de 1647 cm³ muni d'un alimentation par injection d'essence de marque BOSCH L-JETRONIC, régulée grâce à une sonde à oxygène.

La mesure des émissions de ce véhicule a été effectuée sur un banc à rouleaux selon la procédure CVS C/H conformément aux normes fédérales américaines.

Les émissions de base du véhicule sans pot catalytique sont les suivantes:

CO: 15,1 g/mile (9.38 g/km)

HC: 2,9 g/mile (1,8 g/km)

NO$_x$: 4,9 g/mile (3,0 g/km)

Pour l'essai des catalyseurs en billes, un pot catalytique expérimental du type à circulation radiale d'un volume de 1700 cm³ réalisé selon le principe décrit dans la demande française N° 74 06395

(FR-A 2270444) a été adapté sur la tubulure d'échappement à une distance d'environ 1,60 m du moteur.

Les monolithes céramiques et métalliques ont été montés dans des enveloppes métalliques soudées et installées à l'emplacement prévu à l'origine par le constructeur sur le circuit d'échappement à une distance d'environ 0,80 m du moteur.

Le tableau ci-dessous rassemble les résultats obtenus avec les catalyseurs (A), (B), (C), (D), (E), (F), (G), (H), (I), (J), (K) et (L) décrits respectivement dans les exemples 1 à 12. Chaque essai a été effectué avec du catalyseur absolument neuf tel qu'issu de la fabrication, le véhicule n'ayant pas été mis en marche entre le montage du pot et le démarrage de l'essai.

| | Numéro de l'exemple | Référence du catalyseur | Emissions g/mile (g/1,61 km) | | |
|---|---|---|---|---|---|
| | | | CO | HC | NO$_x$ |
| Art antérieur | 1 | A | 2,60 | 0,64 | 0,70 |
| | 2 | B | 2,39 | 0,53 | 0,64 |
| | 3 | C | 2,51 | 0,60 | 0,75 |
| | 4 | D | 2,37 | 0,58 | 0,80 |
| | 5 | E | 2,30 | 0,57 | 0,77 |
| | 6 | F | 2,85 | 0,70 | 0,92 |
| Invention | 7 | G | 1,85 | 0,38 | 0,45 |
| | 8 | H | 1,63 | 0,36 | 0,40 |
| | 9 | I | 1,69 | 0,37 | 0,39 |
| | 10 | J | 1,48 | 0,31 | 0,35 |
| | 11 | K | 1,80 | 0,32 | 0,42 |
| | 12 | L | 1,95 | 0,39 | 0,47 |

## Revendications

1. Procédé de fabrication de catalyseur pour le traitement des gaz d'échappement des moteurs à combustion interne comportant un support revêtu et/ou imprégné d'au moins un métal du groupe du platine et d'au moins un métal de base dont le cérium, caractérisé en ce que:

— dans une première étape, on introduit le ou les précurseurs des métaux de base,

— dans une deuxième étape, on effectue une activation en atmosphère neutre ou oxydante à une température comprise entre 120°C et 800°C,

— dans une troisième étape, on introduit le ou les précurseurs des métaux précieux du groupe du platine et un réducteur retard susceptible d'opérer la réduction des précurseurs des métaux précieux lors de la quatrième étape,

— dans une quatrième étape, on active la catalyseur en atmosphère neutre ou oxydante à une température comprise entre 300 et 800°C.

2. Procédé selon la revendication 1, caractérisé en ce que le réducteur retard est choisi parmi: l'éthylène glycol (1,2-éthane diol), le butylène glycol (1,3-butane diol), le tétraméthylène glycol (1,4 butane diol), l'isoamylène glycol (1,3 butane diol-3 méthyl), le triméthylène glycol (1,3 propane diol), le propylène glycol (1,2 propane diol), le glycérol (propane triol), le saccharose, l'alcool tétrahydrofurfurylique, le phénol (hydroxybenzène), le furfurol (méthanol, 2 furyl-), l'alcool benzylique (toluène α hydroxy-), l'alcool hexahydrobenzylique, l'orthocrésol (toluène, 2 hydroxy-), le diacétate d'éthylène glycol, le glucose, l'amidon, l'éthanol-2 allyloxy (glycol monoallyl éther), l'éthanol-2 butoxy (glycol monobutyl éther), le 4 méthyl-1,3 dioxolan-2-one, le diacétate de 1,2 propane diol, le diacétate de 1,3 propane diol, la diacétine (1,3 diacétate de glycol), le glycerol-1,2 diméthyl éther (2,3 diméthoxy-1 propanol), l'α monoacétine, l'α monobutyrine.

3. Procédé selon la revendication 1 ou 2, caractérisé en ce qu'au moins une partie du réducteur retard est introduite lors de la première étape.

4. Procédé selon la revendication 1, caractérisé en ce que le rapport entre le nombre de moles de réducteur retard et le nombre total d'atomes-grammes de métaux précieux introduits est compris entre 0,1 et 1000.

5. Catalyseur obtenu selon l'une quelconque des revendications précédentes, caractérisé en ce que les métaux précieux qu'il contient n'adsorbent pratiquement pas le monoxyde de carbone à température ambiante.

## Patentansprüche

1. Verfahren zur Herstellung eines Katalysators zur Behandlung von Abgasen von Verbrennungsmotoren, der einen mit mindestens einem Metall aus der Platingruppe und mindestens einem Basismetall, darunter das Cer umhüllten und/oder imprägnierten Träger enthält,

dadurch gekennzeichnet, daß man

— in einer ersten Stufe den oder die Vorläufer der Basismetalle einsetzt,

— in einer zweiten Stufe eine Aktivierung in neutraler oder oxydierender Atmosphäre bei einer Temperatur zwischen 120°C und 800°C durchführt,

— in einer dritten Stufe den oder die Vorläufer der Edelmetalle aus der Platingruppe und ein verzögertes Reduktionsmittel zusetzt, das in der Lage ist, die Reduktion der Vorläufer der Edelmetalle in der vierten Stufe durchzuführen,

— in einer vierten Stufe den Katalysator in neutraler oder oxydierender Atmosphäre bei einer Temperatur zwischen 300 und 800°C aktiviert.

2. Verfahren nach Anspruch 1, dadurch gekennzeichnet, daß das verzögerte Reduktionsmittel ausgewählt wird unter: Ethylenglykol (1,2-Ethandiol), Butylenglykol (1,3-Butandiol), Tetramethylenglykol (1,4-Butandiol), Isoamylenglykol (3-Methylbutandiol-1,3), Trimethylenglykol (1,3-Propandiol), Propylenglykol (1,2-Propandiol), Glycerin (Propantriol), Saccharose, Tetrahydrofurfurylalkohol, Phenol (Hydroxybenzol), Furfurol (2-Furylmethanol), Benzylalkohol (α-Hydroxytoluol), Hexahydrobenzylalkohol, Orthokresol (2-Hydroxytoluol), Ethylenglykoldiacetat, Glucose, Stärke, 2-Allyloxyethanol (Glykolmonoallylether), 2-Butoxyethanol (Glykolmonobutylether), 4-Methyl-1,3-dioxolan-2-on, 1,2-Propandioldiacetat, 1,3-Propandioldiacetat, Diacetin (Glykol-1,3-diacetat), Glycerin-1,2-dimethylether (2,3-Dimethoxy-1-propanol), α-Monoacetin, α-Monobutyrin.

3. Verfahren nach Anspruch 1 oder 2, dadurch gekennzeichnet, daß mindestens ein Teil des verzögerten Reduktionsmittels bei der ersten Stufe zugesetzt wird.

4. Verfahren nach Anspruch 1, dadurch gekennzeichnet, daß das Verhältnis zwischen der Molzahl des verzögerten Reduktionsmittels und der Gesamtzahl der Grammatome der eingesetzten Edelmetalle zwischen 0,1 und 1000 liegt.

5. Katalysator, erhältlich nach einem Verfahren gemäß einem der Ansprüche 1 bis 4, dadurch gekennzeichnet, daß die Edelmetalle, die er enthält, bei Umgebungstemperatur praktisch kein Kohlenmonoxid adsorbieren.

## Claims

1. Process for the manufacture of a catalyst for the treatment of exhaust gases of internal combustion engines, comprising a substrate coated and/or impregnated with at least one platinum group metal and at least one base metal including cerium, characterized in that:

in a first stage, the precursor(s) of the base metals is (or are) introduced,

in a second stage, an activation is carried out in a neutral or oxidizing atmosphere at a temperature of between 120°C and 800°C,

in a third stage, the precursor(s) of the precious metals of the platinum group and a delay reducer capable of effecting the reduction of the precursors of the precious metals during the fourth stage, are introduced,

in a fourth stage, the catalyst is activated in a neutral or oxidizing atmosphere at a temperature of between 300 and 800°C.

2. Process according to Claim 1, characterized in that the delay reducer is chosen from: ethylene glycol (1,2-ethanediol), butylene glycol (1,3-butanediol), tetramethylene glycol (1,4-butanediol), isoamylene glycol (3-methyl-1,3-butanediol), trimethylene glycol (1,3-propanediol), propylene glycol (1,2-propanediol), glycerol (propanetriol), sucrose, tetrahydrofurfuryl alcohol, phenol (hydroxybenzene), furfurol (2-furfurylmethanol), benzyl alcohol (α-hydroxytoluene), hexahydrobenzyl alcohol, orthocresol (2-hydroxytoluene), ethylene glycol diacetate, glucose, starch, 2-allyloxyethanol (glycol monoallyl ether), 2-butoxyethanol (glycol monobutyl ether), 4-methyl-1,3-diosolan-2-one, 1,2-propanediol diacetate, 1,3-propanediol diacetate, diacetin (1,3-glycol diacetate), 1,2-glycerol dimethyl ether (2,3-dimethoxy-1-propanol), α-monoacetin, and α-monobutyrin.

3. Process according to Claim 1 or 2, characterized in that at least a part of the delay reducer is introduced during the first stage.

4. Process according to Claim 1, characterized in that the ratio of the number of moles of delay reducer to the total number of gram-atoms of added precious metals is between 0.1 and 1,000.

5. Catalyst obtained according to any one of the preceding claims, characterized in that the precious metals which it contains adsorb virtually no carbon monoxide at ambient temperature.